# FASCICULE DE BREVET EUROPEEN

(11) **EP 4 051 498 B1**
(45) Date de publication et mention de la délivrance du brevet: **19.07.2023**
(21) Numéro de dépôt: 20807841.0
(22) Date de dépôt: 29.10.2020
(51) Int. Cl.: B33Y 10/00, B33Y 80/00, B29C 64/153, B22F 3/105, B29C 64/165

(54) **PROCÉDÉ DE FABRICATION ADDITIVE D'UNE PIÈCE CONSTITUÉE EN TOUT OU PARTIE PAR UN TREILLIS EN TROIS DIMENSIONS**
VERFAHREN ZUR GENERATIVEN FERTIGUNG EINER KOMPONENTE GANZ ODER TEILWEISE AUS EINEM DREIDIMENSIONALEN GITTER
METHOD FOR THE ADDITIVE MANUFACTURE OF A COMPONENT FULLY OR PARTIALLY MADE UP OF A THREE-DIMENSIONAL LATTICE

(30) Priorité: 31.10.2019 FR 1912250
(43) Date de publication de la demande: 07.09.2022
(73) Titulaire: AddUp, 63118 Cébazat (FR)
(72) Inventeur: PEZET, Didier, 63118 CEBAZAT (FR); DEVROE, Sébastien, 63118 CEBAZAT (FR)
(74) Mandataire: Barascou, Frédéric
(86) Numéro de dépôt international: PCT/FR2020/051953
(87) Numéro de publication internationale: WO 2021/084207

(56) Documents cités:
- WO-A1-2018/178313
- CH-A- 409 374
- US-A1- 2004 099 996

## Description

La présente invention est relative à la fabrication additive d'une pièce constituée en tout ou partie par un treillis en trois dimensions.

Plus précisément, l'invention concerne la fabrication additive par dépôt de lit de poudre d'une pièce constituée en tout ou partie par un treillis en trois dimensions, et l'invention vise à réduire le temps de fabrication du treillis en trois dimensions d'une telle pièce. Le document WO2018/178313A1 divulgue un procédé de fabrication d'une pièce constituée en tout ou partie par au moins un treillis en trois dimensions.

La demande de brevet FR 3 059 577 est relative à un procédé de fabrication d'un élément moulant comprenant un système de refroidissement incorporé en son intérieur et une surface de base. Le procédé comprend une étape de dépôt de poudre formant au moins une couche par adhérence de la poudre sur la surface de base par fusion avec rayon laser, et le dépôt se faisant selon une structure alvéolaire aléatoire et ladite au moins une couche présentant des passages disposés de manière aléatoire, les passages formant une partie du système de refroidissement.

Autrement dit, la demande FR 3 059 577 est relative à un procédé de fabrication additif d'une pièce constituée en tout ou partie par au moins un treillis en trois dimensions ayant un agencement aléatoire.

Selon la demande FR 3 059 577, le treillis en trois dimensions à agencement aléatoire favorise le refroidissement de l'élément moulant comparativement aux canaux de refroidissement équipant auparavant de tels éléments moulants.

Toutefois, le treillis en trois dimensions à agencement aléatoire décrit dans la demande FR 3 059 577 n'offre pas un coût de fabrication optimal.

En effet, comme on peut le déduire de la figure 3 de cette demande FR 3 059 577, dans les différents plans horizontaux correspondant aux différentes couches de poudre utilisées pour fabriquer l'élément moulant, les sections horizontales du treillis en trois dimensions, c'est-à-dire les zones dans lesquelles la poudre est consolidée par exemple par fusion avec un faisceau laser, sont composées d'une pluralité de formes aléatoires distantes et isolées les unes des autres.

Par conséquent, pour chaque couche de poudre et pour réaliser le treillis en trois dimensions, le faisceau laser doit parcourir une grande quantité de petits vecteurs de fabrication avec de nombreux sauts d'une forme aléatoire à consolider à une autre.

Multipliés par le nombre important de couches de poudre nécessaires à la fabrication additive d'un élément moulant, de l'ordre de 1250 couches pour une hauteur de 50 millimètres pour donner un ordre d'idées, la grande quantité de petits vecteurs de fabrication et le nombre important de sauts augmentent considérablement le temps et donc le coût de fabrication de l'élément moulant.

Il est à noter que les mêmes inconvénients sont constatés lors de la fabrication additive de treillis en trois dimensions à agencement non aléatoire et par exemple de type octaèdre.

La présente invention a pour objectif de réduire le temps et donc le coût de fabrication d'une pièce comprenant un treillis en trois dimensions par un procédé de fabrication additive par dépôt de lit de poudre.

A cet effet, l'invention a pour objet un procédé de fabrication d'une pièce constituée en tout ou partie par au moins un treillis en trois dimensions, ce treillis en trois dimensions étant fabriqué de manière additive par dépôts successifs de différentes couches de poudre de fabrication additive et consolidation sélective desdites couches de poudre le long d'une trajectoire comprenant différents vecteurs de fabrication, le treillis en trois dimensions comprenant au moins deux strates de brins parallèles et espacés les uns des autres, les brins d'une strate s'étendant dans une direction longitudinale différente de la direction longitudinale dans laquelle s'étendent les brins d'une autre strate.

Selon l'invention, chaque brin est consolidé uniquement via une pluralité de vecteurs de fabrication s'étendant dans la direction longitudinale dans laquelle s'étend ledit brin.

Grâce à la combinaison d'un treillis en trois dimensions prenant la forme d'un empilement de strates de brins horizontaux et parallèles et à la fabrication additive desdits brins avec des vecteurs de fabrication s'étendant uniquement dans la longueur de ces brins, le procédé selon l'invention permet de maximiser la longueur des vecteurs de fabrication et de réduire le nombre de sauts entre vecteurs de fabrication, ce qui permet de réduire le temps et le coût de fabrication de la pièce.

Avantageusement mais non obligatoirement, le procédé selon l'invention peut aussi prévoir que :
- chaque brin est consolidé via une pluralité de vecteurs de fabrication s'étendant dans une même couche de poudre et via une pluralité de vecteurs de fabrication s'étendant dans plusieurs couches de poudre superposées,
- les vecteurs de fabrication d'un brin dans une couche de poudre sont décalés dans une direction transversale orthogonale à la direction de mise en couche de la poudre et orthogonale à la direction longitudinale de fabrication des brins par rapport aux vecteurs de fabrication du même brin dans la couche de poudre précédente et/ou dans la couche de poudre suivante,
- les vecteurs de fabrication d'un brin dans une couche de poudre sont disposés en quinconce dans un plan transversal défini par la direction de mise en couche de la poudre et la direction transversale par rapport aux vecteurs de fabrication du même brin dans la couche de poudre précédente et/ou dans la couche de poudre suivante,
- les brins d'une première strate s'intersectent avec les brins d'une seconde strate précédant ou suivant cette première strate dans la direction de mise en couche de la poudre,
- chaque brin a une section de contour moyen circulaire,
- le treillis en trois dimensions comprend deux séries de strates successives distantes dans la direction de mise en couche de la poudre et reliées par des branches s'étendant dans la direction de mise en couche de la poudre,
- le treillis en trois dimensions comprenant au moins deux strates successives de brins parallèles et espacés les uns des autres, les brins de la première strate s'étendent dans une direction longitudinale inclinée de 10 à 170° par rapport à la direction longitudinale dans laquelle s'étendent les brins de la seconde strate,
- le treillis en trois dimensions comprenant au moins deux strates successives de brins parallèles et espacés les uns des autres, les brins de la première strate s'étendent dans une direction longitudinale orthogonale à la direction longitudinale dans laquelle s'étendent les brins de la seconde strate,
- le treillis en trois dimensions comprend au moins trois strates successives de brins parallèles et espacés les uns des autres, les brins de chaque strate s'étendant dans une direction longitudinale différente des directions longitudinales dans lesquelles s'étendent les brins des autres strates.

D'autres caractéristiques et avantages de l'invention apparaîtront dans la description qui va suivre. Cette description, donnée à titre d'exemple et non limitative, se réfère aux dessins joints en annexe sur lesquels :
- la figure 1 représente schématiquement un premier agencement des brins d'un treillis en trois dimensions pouvant être fabriqué conformément au procédé selon l'invention,
- la figure 2 illustre schématiquement les vecteurs de fabrication d'un brin d'un treillis en trois dimensions fabriqué conformément au procédé selon l'invention,
- la figure 3 illustre une première variante d'un treillis en trois dimensions pouvant être fabriqué conformément au procédé selon l'invention,
- la figure 4 illustre une seconde variante d'un treillis en trois dimensions pouvant être fabriqué conformément au procédé selon l'invention, et
- la figure 5 illustre un second agencement des brins d'un treillis en trois dimensions pouvant être fabriqué conformément au procédé selon l'invention.

L'invention est relative à la fabrication additive d'une pièce constituée en tout ou partie par un treillis en trois dimensions. Un treillis en trois dimensions est par exemple utilisé pour alléger une pièce ou pour ajouter une structure filtrante à perte de charge ciblée à une pièce.

Plus précisément, l'invention concerne la fabrication additive par dépôt de lit de poudre d'une telle pièce.

La fabrication additive par dépôt de lit de poudre est un procédé de fabrication additif dans lequel une ou plusieurs pièces sont fabriquées par la consolidation sélective de différentes couches de poudre de fabrication additive superposées les unes sur les autres. La première couche de poudre est déposée sur un support tel un plateau, puis consolidée sélectivement, par exemple par fusion totale ou partielle, à l'aide d'au moins une source de consolidation selon une première section horizontale de la ou des pièces à fabriquer. Puis, une deuxième couche de poudre est déposée sur la première couche de poudre qui vient d'être consolidée, et cette deuxième couche de poudre est consolidée sélectivement à son tour, et ainsi de suite jusqu'à la dernière couche de poudre utile à la fabrication de la dernière section horizontale de la ou des pièces à fabriquer.

La source de consolidation peut être un faisceau laser, un faisceau d'électrons, une combinaison de plusieurs de ces faisceaux, ou une tête d'injection d'un liant.

Dans le cadre du procédé de fabrication additif selon l'invention, le treillis en trois dimensions est fabriqué de manière additive par dépôts successifs de différentes couches de poudre de fabrication additive et consolidation sélective desdites couches de poudre le long d'au moins une trajectoire comprenant différents vecteurs de fabrication.

Dans le cas où la consolidation sélective est effectuée par fusion avec un faisceau laser ou un faisceau d'électrons, la trajectoire de consolidation d'une couche de poudre est la trajectoire suivie par le spot du faisceau laser ou du faisceau d'électrons sur la couche de poudre.

Les vecteurs de fabrication sont des segments rectilignes d'une trajectoire de consolidation d'une couche de poudre.

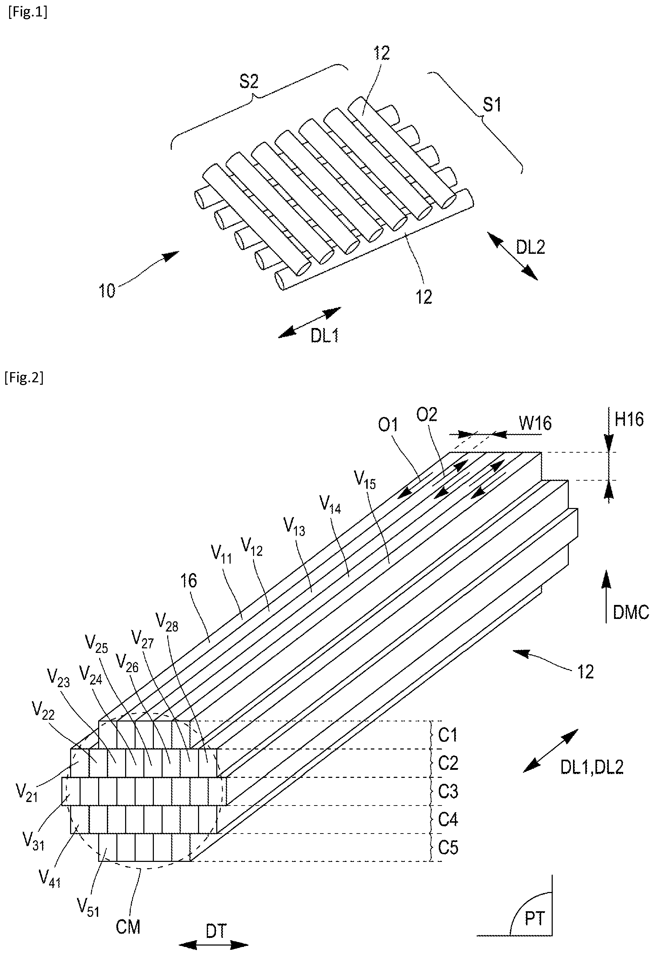

Plus en détails et comme illustré par la figure 1, un treillis en trois dimensions 10 selon l'invention comprend au moins deux strates S1,S2 de brins 12 parallèles et espacés les uns des autres. Les brins 12 d'une strate S1 s'étendent dans une direction longitudinale DL1 différente de la direction longitudinale DL2 dans laquelle s'étendent les brins d'une autre strate S2.

Par exemple, le treillis en trois dimensions comprenant au moins deux strates S1,S2 successives de brins 12 parallèles et espacés les uns des autres, les brins de la première strate S1 s'étendent dans une direction longitudinale DL1 inclinée de 10 à 170° par rapport à la direction longitudinale DL2 dans laquelle s'étendent les brins de la seconde strate S2.

Par exemple, le treillis en trois dimensions comprenant au moins deux strates S1,S2 successives de brins 12 parallèles et espacés les uns des autres, les brins de la première strate S1 s'étendent dans une direction longitudinale DL1 orthogonale à la direction longitudinale DL2 dans laquelle s'étendent les brins de la seconde strate S2.

Comme l'illustre schématiquement la figure 2, le procédé de fabrication selon l'invention prévoit que chaque brin 12 est consolidé uniquement via une pluralité de vecteurs de fabrication V s'étendant dans la direction longitudinale DL1,DL2 dans laquelle s'étend ledit brin.

En figure 2, les vecteurs de fabrication V sont illustrés par les cordons de poudre 16 consolidés par un faisceau laser, un faisceau d'électrons, une combinaison de plusieurs de ces faisceaux, ou une tête d'injection d'un liant. Schématiquement, ces cordons 16 prennent la forme de parallélépipèdes de hauteur H16 dans la direction de mise en couche de la poudre DMC et de largeur W16 dans une direction transversale DT orthogonale à la direction de mise en couche de la poudre DMC et orthogonale à la direction longitudinale DL1,DL2 de fabrication des brins.

La direction de mise en couche de la poudre DMC et la direction transversale DT orthogonale à la direction de mise en couche de la poudre DMC et orthogonale à la direction longitudinale DL1,DL2 de fabrication des brins définissent un plan transversal PT.

Comme le montre l'extrémité du brin 12 illustré en figure 2 dans le plan transversal PT, un brin 12 est fabriqué dans plusieurs couches de poudre C1,C2,C3,C4,C5 superposées dans la direction de mise en couche de la poudre DMC.

Plus en détail, chaque brin 12 est consolidé via une pluralité de vecteurs de fabrication V₁₁,V₁₂,V₁₃,V₁₄,V₁₅ s'étendant dans une même couche de poudre C1 et via une pluralité de vecteurs de fabrication V₁₁,V₂₁,V₃₁,V₄₁,V₅₁ s'étendant dans plusieurs couches de poudre C1,C2,C3,C4,C5 superposées. Par exemple, chaque brin 12 a une section de contour moyen CM circulaire.

Pour améliorer la tenue mécanique d'un brin 12, les vecteurs V₁₁,V₁₂,V₁₃,V₁₄,V₁₅ de fabrication d'un brin dans une couche de poudre C1 sont de préférence décalés dans la direction transversale DT par rapport aux vecteurs de fabrication V₂₁,V₂₂,V₂₃,V₂₄,V₂₅,V₂₆,V₂₇,V₂₈ du même brin dans la couche de poudre précédente C2 et/ou dans la couche de poudre suivante.

Comme illustré en figure 2, les vecteurs V₁₁,V₁₂,V₁₃,V₁₄,V₁₅ de fabrication d'un brin dans une couche de poudre C1 peuvent être décalés dans la direction transversale DT par rapport aux vecteurs de fabrication V₂₁,V₂₂,V₂₃,V₂₄,V₂₅,V₂₆,V₂₇,V₂₈ du même brin dans la couche de poudre précédente C2 et/ou dans la couche de poudre suivante de la demi-largeur d'un vecteur de fabrication V, soit de la moitié de la largeur W16 d'un cordon de poudre correspondant à un vecteur de fabrication.

Ainsi, dans le plan transversal PT, les vecteurs de fabrication V₁₁,V₁₂,V₁₃,V₁₄,V₁₅ d'un brin dans une couche de poudre peuvent être disposés en quinconce dans le plan transversal PT par rapport aux vecteurs de fabrication V₂₁,V₂₂,V₂₃,V₂₄,V₂₅,V₂₆,V₂₇,V₂₈ du même brin dans la couche de poudre précédente et/ou dans la couche de poudre suivante, tant qu'il ne s'agit pas de la dernière couche de poudre utile à la fabrication de ce brin.

Pour réduire le temps de fabrication du treillis en trois dimensions, les vecteurs de fabrication adjacents V₁₁,V₁₂ d'un brin dans une même couche de poudre sont parcourus dans des sens O1,O2 opposés dans la direction longitudinale de fabrication dudit brin. Autrement dit, dans chaque couche de poudre utilisée pour sa fabrication, un brin 12 est fabriqué selon une stratégie dite aller-retours, et sans génération d'un contour.

En suivant les règles de fabrication qui viennent d'être décrites, le procédé selon l'invention permet de fabriquer un treillis en trois dimensions avec un gain de temps de 25% en comparaison d'autres méthodes de fabrication de l'art antérieur.

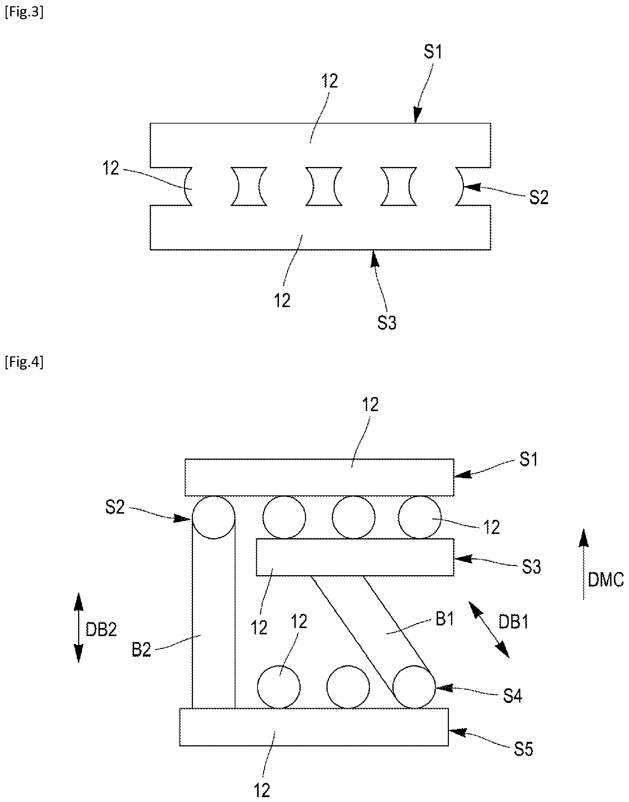

En vue de renforcer le treillis en trois dimensions et comme illustré schématiquement en figure 3, les brins 12 d'une première strate S2 peuvent s'intersecter avec les brins d'une seconde strate S1,S3 précédant ou suivant cette première strate dans la direction de mise en couche de la poudre DMC.

Pour certaines utilisations du treillis en trois dimensions, il peut être utile d'éloigner les brins de deux strates successives. A cet effet, et comme illustré en figure 4, le treillis en trois dimensions 10 peut comprendre deux séries S1,S2,S3 et S4,S5 de strates successives distantes dans la direction de mise en couche de la poudre DMC, et donc dans la hauteur du treillis en trois dimensions 10, et reliées par des branches B1,B2 s'étendant dans la direction de mise en couche de la poudre DMC. Plus précisément, les branches B1,B2 s'étendent selon des directions DB1,DB2 perpendiculaires ou inclinées par rapport aux directions longitudinales DL1,DL2 de fabrication des brins des deux séries de strates distantes.

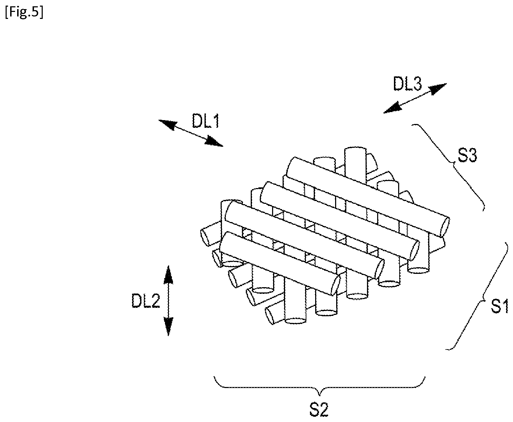

Alternativement ou en combinaison avec un treillis en trois dimensions comprenant des strates de brins orthogonaux, le treillis en trois dimensions 10 peut aussi comprendre au moins trois strates successives S1,S2,S3 de brins parallèles et espacés les uns des autres, les brins de chaque strate s'étendant dans une direction longitudinale DL1,DL2,DL3 différente des directions longitudinales DL1,DL2,DL3 dans lesquelles s'étendent les brins des autres strates. Dans l'exemple illustré par la figure 5, trois strates S1,S2,S3 de brins sont superposées et la direction longitudinale de fabrication des brins d'une strate est inclinée de 120° par rapport aux directions longitudinales de fabrication des brins des deux autres strates.

## Revendications

1. Procédé de fabrication d'une pièce constituée en tout ou partie par au moins un treillis en trois dimensions (10), ce treillis en trois dimensions étant fabriqué de manière additive par dépôts successifs de différentes couches de poudre de fabrication additive et consolidation sélective desdites couches de poudre le long d'au moins une trajectoire comprenant différents vecteurs de fabrication, le treillis en trois dimensions comprenant au moins deux strates (S1, S2) de brins (12) parallèles et espacés les uns des autres, les brins d'une strate (S1) s'étendant dans une direction longitudinale (DL1) différente de la direction longitudinale (DL2) dans laquelle s'étendent les brins d'une autre strate (S2), le procédé de fabrication étant **caractérisé en ce que** chaque brin est consolidé uniquement via une pluralité de vecteurs de fabrication (V11 - V51) s'étendant dans la direction longitudinale dans laquelle s'étend ledit brin.

2. Procédé de fabrication d'une pièce constituée en tout ou partie par un treillis en trois dimensions selon la revendication 1, dans lequel chaque brin est consolidé via une pluralité de vecteurs de fabrication s'étendant dans une même couche de poudre et via une pluralité de vecteurs de fabrication s'étendant dans plusieurs couches de poudre superposées.

3. Procédé de fabrication d'une pièce constituée en tout ou partie par un treillis en trois dimensions selon la revendication 2, dans lequel les vecteurs de fabrication d'un brin dans une couche de poudre sont décalés dans une direction transversale orthogonale à la direction de mise en couche de la poudre et orthogonale à la direction longitudinale de fabrication des brins par rapport aux vecteurs de fabrication du même brin dans la couche de poudre précédente et/ou dans la couche de poudre suivante.

4. Procédé de fabrication d'une pièce constituée en tout ou partie par un treillis en trois dimensions selon la revendication 3, dans lequel les vecteurs de fabrication d'un brin dans une couche de poudre sont disposés en quinconce dans un plan transversal défini par la direction de mise en couche de la poudre et la direction transversale par rapport aux vecteurs de fabrication du même brin dans la couche de poudre précédente et/ou dans la couche de poudre suivante.

5. Procédé de fabrication d'une pièce constituée en tout ou partie par un treillis en trois dimensions selon l'une des revendications précédentes, dans lequel les brins d'une première strate s'intersectent avec les brins d'une seconde strate précédant ou suivant cette première strate dans la direction de mise en couche de la poudre.

6. Procédé de fabrication d'une pièce constituée en tout ou partie par un treillis en trois dimensions selon l'une des revendications précédentes, dans lequel chaque brin a une section de contour moyen circulaire.

7. Procédé de fabrication d'une pièce constituée en tout ou partie par un treillis en trois dimensions selon l'une des revendications précédentes, dans lequel le treillis en trois dimensions comprend deux séries de strates successives distantes dans la direction de mise en couche de la poudre et reliées par des branches s'étendant dans la direction de mise en couche de la poudre.

8. Procédé de fabrication d'une pièce constituée en tout ou partie par un treillis en trois dimensions selon l'une des revendications précédentes, dans lequel, le treillis en trois dimensions comprenant au moins deux strates successives de brins parallèles et espacés les uns des autres, les brins de la première strate s'étendent dans une direction longitudinale inclinée de 10 à 170° par rapport à la direction longitudinale dans laquelle s'étendent les brins de la seconde strate.

9. Procédé de fabrication d'une pièce constituée en tout ou partie par un treillis en trois dimensions selon la revendication 8, dans lequel, le treillis en trois dimensions comprenant au moins deux strates successives de brins parallèles et espacés les uns des autres, les brins de la première strate s'étendent dans une direction longitudinale orthogonale à la direction longitudinale dans laquelle s'étendent les brins de la seconde strate.

10. Procédé de fabrication d'une pièce constituée en tout ou partie par un treillis en trois dimensions selon l'une des revendications précédentes, dans lequel le treillis en trois dimensions comprend au moins trois strates successives de brins parallèles et espacés les uns des autres, les brins de chaque strate s'étendant dans une direction longitudinale différente des directions longitudinales dans lesquelles s'étendent les brins des autres strates.

## Patentansprüche

1. Verfahren zur Fertigung einer Komponente, die ganz oder teilweise aus mindestens einem dreidimensionalen Gitter (10) gebildet ist, wobei das dreidimensionale Gitter in additiver Weise durch aufeinanderfolgende Ablagerungen verschiedener Schichten von Pulver zur additiven Fertigung und selektive Verfestigung dieser Pulverschichten entlang mindestens einer Bahn, die verschiedene Fertigungsvektoren umfasst, gefertigt wird, wobei das dreidimensionale Gitter mindestens zwei Schichten (S1, S2) aus parallelen und voneinander beabstandeten Strängen (12) umfasst, wobei sich die Stränge einer Schicht (S1) in einer Längsrichtung (DL1) erstrecken, die von der Längsrichtung (DL2), in der sich die Stränge einer anderen Schicht (S2) erstrecken, verschieden ist,
wobei das Fertigungsverfahren **dadurch gekennzeichnet ist, dass** jeder Strang lediglich über eine Vielzahl von Fertigungsvektoren (V11 - V51), die sich in der Längsrichtung erstrecken, in der sich der Strang erstreckt, verfestigt wird.

2. Verfahren zur Fertigung einer Komponente, die ganz oder teilweise durch ein dreidimensionales Gitter gebildet ist, nach Anspruch 1, wobei jeder Strang über eine Vielzahl von Fertigungsvektoren, die sich in einer gleichen Pulverschicht erstecken, und über eine Vielzahl von Fertigungsvektoren, die sich in mehreren übereinanderliegenden Pulverschichten erstrecken, verfestigt wird.

3. Verfahren zur Fertigung einer Komponente, die ganz oder teilweise durch ein dreidimensionales Gitter gebildet ist, nach Anspruch 2, wobei die Fertigungsvektoren eines Strangs in einer Pulverschicht in einer Querrichtung senkrecht zur Pulverschichtungsrichtung und senkrecht zur Längsrichtung der Strangfertigung in Bezug auf die Fertigungsvektoren desselben Strangs in der vorausgehenden und/oder in der nachfolgenden Pulverschicht versetzt sind.

4. Verfahren zur Fertigung einer Komponente, die ganz oder teilweise durch ein dreidimensionales Gitter gebildet ist, nach Anspruch 3, wobei die Fertigungsvektoren eines Strangs in einer Pulverschicht in einer Querebene, die durch die Pulverschichtungsrichtung und die Querrichtung definiert ist, in Bezug auf die Fertigungsvektoren desselben Strangs in der vorausgehenden Pulverschicht und/oder in der nachfolgenden Pulverschicht versetzt angeordnet sind.

5. Verfahren zur Fertigung einer Komponente, die ganz oder teilweise durch ein dreidimensionales Gitter gebildet ist, nach einem der vorausgehenden Ansprüche, wobei sich die Stränge einer ersten Schicht mit den Strängen einer zweiten Schicht, die dieser ersten Schicht in der Pulverschichtungsrichtung vorausgeht oder folgt, schneiden.

6. Verfahren zur Fertigung einer Komponente, die ganz oder teilweise durch ein dreidimensionales Gitter gebildet ist, nach einem der vorausgehenden Ansprüche, wobei jeder Strang einen Querschnitt mit kreisförmiger Durchschnittskontur aufweist.

7. Verfahren zur Fertigung einer Komponente, die ganz oder teilweise durch ein dreidimensionales Gitter gebildet ist, nach einem der vorausgehenden Ansprüche, wobei das dreidimensionale Gitter zwei Reihen aufeinanderfolgender Schichten aufweist, die in der Pulverschichtungsrichtung voneinander beabstandet und durch Äste, die sich in der Pulverschichtungsrichtung erstrecken, miteinander verbunden sind.

8. Verfahren zur Fertigung einer Komponente, die ganz oder teilweise durch ein dreidimensionales Gitter gebildet ist, nach einem der vorausgehenden Ansprüche, wobei das dreidimensionale Gitter mindestens zwei aufeinanderfolgende Schichten paralleler und voneinander beabstandeter Stränge aufweist, wobei sich die Stränge der ersten Schicht in einer Längsrichtung erstrecken, die in Bezug auf die Längsrichtung, in der sich die Stränge der zweiten Schicht erstrecken, um 10 bis 170° geneigt ist.

9. Verfahren zur Fertigung einer Komponente, die ganz oder teilweise durch ein dreidimensionales Gitter gebildet ist, nach Anspruch 8, wobei das dreidimensionale Gitter mindestens zwei aufeinanderfolgende Schichten paralleler und voneinander beabstandeter Stränge aufweist, wobei sich die Stränge der ersten Schicht in einer Längsrichtung erstrecken, die senkrecht zu der Längsrichtung verläuft, in der sich die Stränge der zweiten Schicht erstrecken.

10. Verfahren zur Fertigung einer Komponente, die ganz oder teilweise durch ein dreidimensionales Gitter gebildet ist, nach einem der vorausgehenden Ansprüche, wobei das dreidimensionale Gitter mindestens drei aufeinanderfolgende Schichten paralleler und voneinander beabstandeter Stränge aufweist, wobei sich die Stränge jeder Schicht in einer Längsrichtung erstrecken, die von den Längsrichtungen, in denen sich die Stränge der anderen Schichten erstrecken, verschieden ist.

## Claims

1. Method for manufacturing a part made up entirely or partially of at least one three-dimensional lattice (10), this three-dimensional lattice being produced by additive manufacturing by successive depositions of different layers of additive manufacturing powder and selective consolidation of said layers of powder along at least one path comprising different manufacturing vectors, the three-dimensional lattice comprising at least two layers (S1,S2) of parallel strands (12) that are spaced apart from one another, the strands of one layer (S1) extending in a longitudinal direction (DL1) different from the longitudinal direction (DL2) in which the strands of another layer (S2) extend, the manufacturing method being **characterized in that** each strand is consolidated only via a plurality of manufacturing vectors (V11-V51) extending in the longitudinal direction in which said strand extends.

2. Method for manufacturing a part made up entirely or partially of a three-dimensional lattice according to Claim 1, wherein each strand is consolidated via a plurality of manufacturing vectors extending in one and the same layer of powder and via a plurality of manufacturing vectors extending in several superposed layers of powder.

3. Method for manufacturing a part made up entirely or partially of a three-dimensional lattice according to Claim 2, wherein the manufacturing vectors for a strand in a layer of powder are offset in a transverse direction orthogonal to the layering direction of the powder and orthogonal to the longitudinal manufacturing direction for the strands with respect to the manufacturing vectors for the same strand in the preceding layer of powder and/or in the following layer of powder.

4. Method for manufacturing a part made up entirely or partially of a three-dimensional lattice according to Claim 3, wherein the manufacturing vectors for a strand in a layer of powder are disposed in a staggered manner in a transverse plane defined by the layering direction of the powder and the transverse direction with respect to the manufacturing vectors for the same strand in the preceding layer of powder and/or in the following layer of powder.

5. Method for manufacturing a part made up entirely or partially of a three-dimensional lattice according to one of the preceding claims, wherein the strands of a first layer intersect the strands of a second layer preceding or following this first layer in the layering direction of the powder.

6. Method for manufacturing a part made up entirely or partially of a three-dimensional lattice according to one of the preceding claims, wherein each strand has a section with a circular mean contour.

7. Method for manufacturing a part made up entirely or partially of a three-dimensional lattice according to one of the preceding claims, wherein the three-dimensional lattice comprises two successive series of layers that are at a spacing in the layering direction of the powder and connected by branches that extend in the layering direction of the powder.

8. Method for manufacturing a part made up entirely or partially of a three-dimensional lattice according to one of the preceding claims, wherein, with the three-dimensional lattice comprising at least two successive layers of parallel strands that are spaced apart from one another, the strands of the first layer extend in a longitudinal direction inclined at 10 to 170° with respect to the longitudinal direction in which the strands of the second layer extend.

9. Method for manufacturing a part made up entirely or partially of a three-dimensional lattice according to Claim 8, wherein, with the three-dimensional lattice comprising at least two successive layers of parallel strands that are spaced apart from one another, the strands of the first layer extend in a longitudinal direction orthogonal to the longitudinal direction in which the strands of the second layer extend.

10. Method for manufacturing a part made up entirely or partially of a three-dimensional lattice according to one of the preceding claims, wherein the three-dimensional lattice comprises at least three successive layers of parallel strands that are spaced apart from one another, the strands of each layer extending in a longitudinal direction different from the longitudinal directions in which the strands of the other layers extend.
